Europäisches Patentamt

European Patent Office

Office européen des brevets

(11) Veröffentlichungsnummer: **0 312 781**

**A1**

## (12) EUROPÄISCHE PATENTANMELDUNG

(21) Anmeldenummer: 88115359.7

(22) Anmeldetag: 19.09.88

(51) Int. Cl.⁴: **F16K 31/02 , F16K 31/04**

Geänderte Patentansprüche gemäss Regel 86
(2) EPÜ.

(30) Priorität: 21.09.87 DE 3731679
30.05.88 DE 3818342

(43) Veröffentlichungstag der Anmeldung:
**26.04.89 Patentblatt 89/17**

(84) Benannte Vertragsstaaten:
**AT BE CH DE ES FR GB GR IT LI LU NL SE**

(71) Anmelder: **HANSA METALLWERKE AG**
**Sigmaringer Strasse 107**
**D-7000 Stuttgart 81(DE)**

(72) Erfinder: **Gruber, Walter F.**
**Widmaierstrasse 165B**
**D-7000 Stuttgart 80(DE)**
Erfinder: **Maag, Horst C.F., Dipl.-Ing.**
**Cheruskerstrasse 22**
**D-7036 Schönaich(DE)**

(74) Vertreter: **Ostertag, Ulrich et al**
**Patentanwälte Dr. Ulrich Ostertag Dr.**
**Reinhard Ostertag Eibenweg 10**
**D-7000 Stuttgart 70(DE)**

(54) **Berührungslos gesteuerte Sanitärarmatur.**

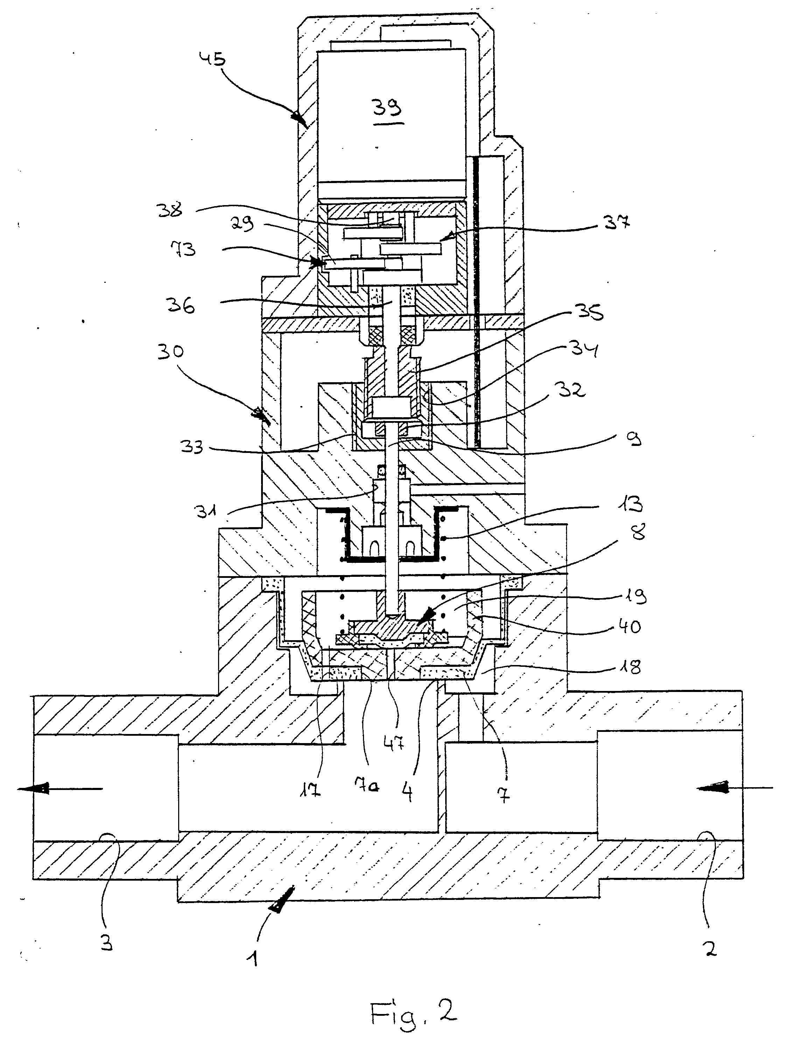

(57) Bei einer berührungslos gesteuerten Sanitärarmatur (60) ist mindestens ein Sensor (66,68) vorhanden, über welchen die Menge des ausfließenden Wasser kontinuierlich eingestellt werden kann. Hierzu findet ein pilotgesteuertes Ventil (Fig.2) Verwendung, dessen Betätigungsorgan ein elektrischer Motor (39) ist. Die Drehbewegung der Ausgangswelle des elektrischen Motors (39) wird in eine Linearbewegung eines Stößels (9) umgesetzt. Dieser Stößel (9) wiederum bewegt den Schließkörper (8), welcher die Pilotöffnung (47) einer Membran (7) verschließt bzw. freigibt. Die Membran (7) ihrerseits regelt im Zusammenwirken mit einem Ventilsitz (4) den eigentlichen Wasserstrom. Die Gesamtordnung des Ventiles ist derart, daß die Membran (7) in allen Zwischenstellungen zwischen der vollständigen Schließ- und der vollständigen Offenstellung stabil der Position des Schließkörpers (8) folgt. So ist unter Einsatz geringster Energie eine kontinuierliche Einstellung des Wasserstromes möglich.

Fig 2

Die Erfindung betrifft eine berührungslos gesteuerte Sanitärarmatur mit

a) mindestens einem Ventil, durch welches die Menge des die Sanitärarmatur durchfließenden Wassers kontinuierlich veränderbar ist;

b) mindestens einem Sensor und einem diesem Sensor zugeordneten Überwachungsraum, wobei die Stellung des Ventils verändert wird, wenn ein Gegenstand in den Überwachungsraum eintritt bzw. diesen verläßt.

Die Anordnung kann dabei so sein, daß die Stellung des Ventiles sich kontinuierlich solange verändert, wie sich ein Gegenstand in dem Überwachungsraum befindet, oder so, daß beim Eintritt des Gegenstandes in den Überwachungsraum bzw. beim Verlassen des Überwachungsraumes das Ventil in eine vorgewählte Stellung gefahren wird.

Eine derartige Sanitärarmatur ist in der DE-OS 27 35 942 beschrieben. Über die Art der hierbei in Einsatz kommenden Ventile ist dort allerdings nichts ausgesagt. Da die elektrischen Elemente, die zu der bekannten Sanitärarmatur gehörten, über das Netz betrieben wurden, ergaben sich diesbezüglich auch keine Probleme. Die Notwendigkeit eines Anschlusses berührungslos gesteuerter Sanitärarmaturen an das elektrische Hausnetz erweist sich jedoch zunehmend als Hindernis für die Einführung derartiger, hochkomfortabler Armaturen. Zum einen ist nämlich die nachträgliche Installation sehr erschwert, insbesondere, wenn freigeführte Kabel vermieden werden sollen; zum anderen fallen derartige Sanitärarmaturen in das Fachgebiet zweier verschiedener Handwerker, nämlich des Sanitärinstallateurs einerseits und des Elektroinstallateurs andererseits. Dies kompliziert sowohl die Montage als auch die Wartung derartiger Armaturen.

Aufgabe der vorliegenden Erfindung ist es, eine Sanitärarmatur der eingangs genannten Art derart auszugestalten, daß sie mit einem geringstmöglichen Bedarf an elektrischer Energie auskommt und so ggf. auch über Batterien, evtl. unterstützt durch Solarzellen oder Peltierelementen, betrieben werden kann.

Diese Aufgabe wird erfindungsgemäß dadurch gelöst, daß

c) das Ventil ein pilotgesteuertes Ventil ist und umfaßt:

ca) eine mit einem Ventilsitz zusammenwirkende Membran, welche sich unter der Wirkung der beidseits von ihr anstehenden Wasserdrucke relativ zum Ventilsitz bewegt und eine Pilotöffnung aufweist;

cb) einen von der Pilotöffnung der Membran abhebbaren bzw. an diesen anlegbaren Schließkörper, der über einen linear bewegbaren Stößel betätigbar ist;

cc) einen elektrischen Motor, dessen Ausgangswelle eine Drehbewegung durchführt;

cd) eine Einrichtung, welche die Drehbewegung der Ausgangswelle in eine Linearbewegung des Stößels umsetzt.

Ein erfindungsgemäßes Ventil zeichnet sich durch eine außerordentlich kleine Energieaufnahme aus, da die eigentliche Arbeit beim Regeln des Wasserstromes durch den Wasserdruck selbst geleistet wird und das Ventil nur zur Veränderung seiner Position bestromt zu werden braucht, während es in allen Öffnungsstellungen stromlos bleiben kann, solange es sich nicht bewegt. Überraschenderweise hat sich herausgestellt, daß derartige Ventile zur kontinuierlichen Mengensteuerung geeignet sind, da die Membran dem Schließkörper auch in allen Zwischenstellungen folgt und hier stabile Positionen einzunehmen vermag. Dies ist bei pilotgesteuerten Ventilen bisher nicht bekannt.

Bei einer besonderen Ausgestaltung der Erfindung sind zwei Sensoren vorhanden, wobei bei Anwesenheit eines Gegenstandes im Überwachungsraum des ersten Sensors der elektrische Motor in einer Richtung verstellt wird, die einer Vergrößerung des Wasserflusses entspricht, und bei Anwesenheit eines Gegenstandes im Überwachungsraum des zweiten Sensors der elektrische Motor in einer Richtung verstellt, die einer Verringerung des Wasserflusses entspricht.

Nach dem erfinderischen Prinzip können auch Mischarmaturen gestaltet werden. Dann sind zwei unabhängige, pilotgesteuerte Ventile vorgesehen, von denen das eine der Einstellung des Kaltwasserflusses und das andere der Einstellung des Warmwasserflusses dient und denen jeweils mindestens ein gesonderter Sensor zugeordnet ist.

Bei einer bevorzugten Ausführungsform der Erfindung ist ein zusätzlicher Sensor vorgesehen, wobei beim Eintritt eines Gegenstandes in den Überwachungsraum des zusätzlichen Sensors alle Ventile in einen bevorzugten Öffnungshub und beim Austritt des Gegenstandes aus dem Überwachungsraum alle Ventile in den Schließzustand gebracht werden. Mit Hilfe dieses Sensors läßt sich die Sanitärarmatur in einer Weise betreiben, die derjenigen herkömmlicher berührungsloser Armaturen ohne Mengensteuerung entspricht: Beim Eintreten des Gegenstandes (z.B. der Hand des Benutzers oder des Benutzers selbst) in den Überwachungsraum des zusätzlichen Sensors beginnt das Wasser mit einer bevorzugten Literleistung zu laufen. Erst wenn der Benutzer mit dieser bevorzugten Literleistung nicht einverstanden ist, wird durch Beaufschlagung des ersten bzw. ggf. auch des zweiten Sensors die Menge des ausfließenden Wassers entsprechend den Wünschen des Benutzers individuell eingestellt.

Dabei ist es vorteilhaft, wenn in einer Betriebsart die beiden Sensoren, welche der Vergrößerung bzw. der Verkleinerung des Wasserstromes dienen, zur Einstellung des bevorzugten Öffnungshubes verwendbar sind.

Bei einer besonderen Ausführungsform der Erfindung ist der elektrische Motor ein Gleichstrommotor.

Vorzugsweise wird dabei der Gleichstrommotor mit gepulstem Gleichstrom gespeist. Hierdurch läßt sich - je nach Tastverhältnis - die Drehgeschwindigkeit des Gleichstrommotors so verringern, daß eine feinfühlige und bequeme Einstellung des gewünschten Wasserflusses möglich ist.

Alternativ kann als elektrischer Motor auch ein Schrittmotor eingesetzt werden, dessen Ausgangswelle sich bei jedem zugeführten elektrischen Impuls um einen definierten Winkel verdreht.

Der Schrittmotor kann unidirektional sein, d.h., sich nur in einer Richtung verdrehen. In diesem Falle genügt ein Sensor zur Veränderung der Stellung des Ventils. Das Getriebe muß so ausgelegt sein, daß der Schließkörper periodisch zwischen seinen beiden Endstellungen hin- und herbewegt wird. Derartige unidirektionale Schrittmotoren sind besonders einfach und stromsparend herstellbar.

Alternativ kann der Schrittmotor bidirektional sein. In diesem Falle sind zwei Sensoren vorhanden, wobei bei Anwesenheit eines Gegenstandes im Überwachungsbereich des ersten Sensors der Schrittmotor in einer Richtung verstellt wird, die einer Vergrößerung des Wasserflusses entspricht, und bei Anwesenheit eines Gegenstandes im Überwachungsraum des zweiten Sensors der Schrittmotor in einer Richtung verstellt wird, die einer Verkleinerung des Wasserflusses entspricht. Diese Ausgestaltung der Erfindung ist komfortabler, da es in jeder Stellung des Ventiles möglich ist, sofort eine Bewegungsumkehr der Membran zu erreichen, ohne daß diese zunächst eine der beiden Extremstellungen durchlaufen muß. Letzteres ist bei unidirektionalen Schrittmotoren je nach den Umständen der Fall.

Schließlich besteht die Erfindung allgemein in der Verwendung eines pilotgesteuerten Ventils mit
a) einer mit einem Ventilsitz zusammenwirkenden Membran, welche sich unter der Wirkung der beidseits von ihr anstehenden Wasserdrucke relativ zum Ventilsitz bewegt und eine Pilotöffnung aufweist;
b) einem von der Pilotöffnung der Membran abhebbaren bzw. an diese anlegbaren Schließkörper, der über einen linear bewegbaren Stößel betätigbar ist;
c) einem elektrischen Motor, dessen Ausgangswelle eine Drehbewegung durchführt,
d) einer Einrichtung, welche die Drehbewegung der Ausgangswelle in eine Linearbewegung des Stößels umsetzt,
zur kontinuierlichen Einstellung der Menge eines strömenden Mediums. Die Erfindung macht dabei von der überraschenden, in allen Zwischenstellungen stabilen Charakteristik des beschriebenen pilotgesteuerten Ventils Gebrauch.

Ein Ausführungsbeispiel der Erfindung wird nachfolgend anhand der Zeichnung näher erläutert; es zeigen

Figur 1: die Seitenansicht einer berührungslos gesteuerten Sanitärarmatur;

Figur 2: einen Axialschnitt durch ein erstes Ausführungsbeispiel eines pilotgesteuerten Ventils, welches bei der in Figur 1 dargestellten Sanitärarmatur eingesetzt wird;

Figur 3: ein Blockschaltbild eines Ausführungsbeispieles für eine Schaltungsanordnung zum Betrieb der Sanitärarmatur von Figur 1;

Figur 4: schematisch ein Diagramm der Öffnungscharakteristik des in Figur 2 dargestellten pilotgesteueren Ventils;

Figur 5a: das Blockschaltbild eines ersten Ausführungsbeispieles einer Schaltungsanordnung zum Betrieb der Sanitärarmatur von Figur 1 bei Verwendung eines unidirektionalen Schrittmotors;

Figur 5b: ein Blockschaltbild eines Ausführungsbeispieles für eine Schaltungsanordnung mit bidirektionalem Schrittmotor;

Figur 6: einen Axialschnitt durch ein zweites Ausführungsbeispiel eines pilotgesteuerten Ventils, welches bei der in Figur 1 dargestellten Sanitärarmatur eingesetzt wird;

Figur 7: ein weiteres Ausführungsbeispiel für ein geeignetes pilotgesteuertes Ventil;

Figur 8: einen Schnitt durch den Schrittmotor, der Teil des in Figur 4 oder 5 dargestellten Ventiles ist.

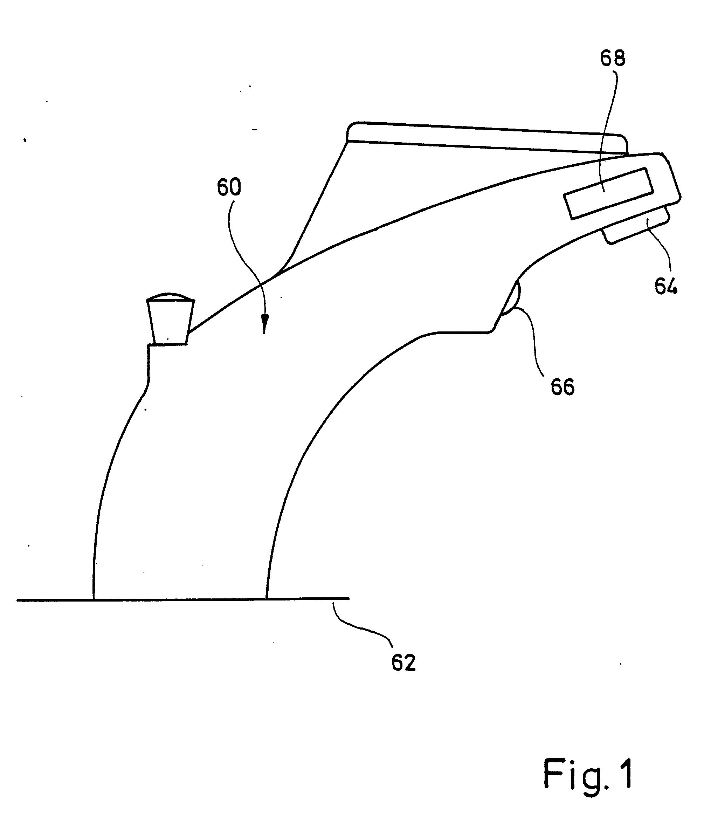

In Figur 1 ist die Seitenansicht einer Sanitärarmatur 60 gezeigt, die an einem Waschtisch 62 oder dergleichen in bekannter Weise montiert ist. Sie umfaßt einen Auslauf 64, zwei seitliche Sensoren 68 (von denen in der Zeichnung nur einer erkennbar ist) sowie einen vorderen, auf den Benutzer der Sanitärarmatur 60 zu gerichteten Sensor 66. Im Inneren der Sanitärarmatur 60 befinden sich ein pilotgesteuertes Ventil, welches nachfolgend ausführlicher beschrieben wird und zur kontinuierlichen Veränderung der Menge des aus dem Auslauf 64 fließenden Wassers dient, sowie die zu dessen Betrieb erforderlichen elektrischen Bauelemente einschließlich einer Batterie.

Das pilotgesteuerte Ventil ist in Figur 2 im Schnitt dargestellt. Es umfaßt ein Gehäuseteil 1 mit einer Einlaßöffnung 2 und einer Auslaßöffnung 3. Im Strömungsweg zwischen der Einlaßöffnung 2 und der Auslaßöffnung 3 ist ein gehäusefester Ventilsitz 4 angeordnet, auf welchem eine topfförmige Membran 7 aufliegt. An dieser ist auf dem dem Ventilsitz 4 abgewandten Seite ein Formteil 40 befestigt. Der Rand der Membran 7 ist zwischen einer Schulter des Gehäuseteils 1 und einem auf dieses aufgesetzten weiteren Gehäuseteil 30 verklemmt. Sie dichtet dabei gleichzeitig die beiden Gehäuseteile 1, 30 gegeneinander ab.

Das Formteil 40 weist eine zentrale Pilotöffnung 47 auf, welche koaxial zu einer größeren zentralen Öffnung 7a der Membran 7 angeordnet ist. Die Pilotöffnung 47 ist durch einen Schließkörper 8 verschließbar, der am Ende eines Stößels 9 angebracht ist. Der Schließkörper 8 steht unter der Wirkung einer Druckfeder 13, welche sich an einer Stufe des Gehäuseteiles 30 abstützt. Der Öffnungshub der Membran 7 wird dadurch begrenzt, daß das Formteil 40 an der in der Zeichnung unteren Stirnfläche des Gehäuseteiles 30 anstößt.

Radial außerhalb des Ventilsitzes 4 ist an der Membran 7 sowie an dem Formkörper 40 eine Druckausgleichsöffnung 17 vorgesehen, welche eine mit der Einlaßöffnung 2 in Verbindung stehende Kammer 18 mit einer zwischen der Membran 7 und dem Gehäuseteil 30 gebildeten Druckausgleichskammer 19 verbindet.

Der Stößel 9 durchsetzt eine axiale Stufenbohrung 31 des Gehäuseteiles 30 sowie verschiedene hierin angeordnete Dichtungen (ohne Bezugszeichen). An seinem oberen Ende ist ein Mitnahmering 32 befestigt. Der Mitnahmering wird von einem nach oben geöffneten, becherförmigen Schraubteil 33 übergriffen, dessen Boden ebenfalls von dem Stößel 9 durchsetzt wird. Das Schraubteil 33 ist in einer axialen Bohrung 34 des Gehäuseteiles 30 axial geführt und auf das Außengewinde eines zylindrischen Teiles 35 aufgeschraubt.

Das zylindrische Teil 35 ist an der Abtriebswelle 36 eines Zahnradgetriebes 37 befestigt. Die Eingangswelle 38 des Zahnradgetriebes 37 wird durch einen bidirektionalen Gleichstrommotor 39 in Drehung versetzt. Zahnradgetriebe 37 sowie gleichstrommotor 39 befinden sich innerhalb eines dritten Gehäuseteiles 45, welches auf die obere Stirnseite des Gehäuseteiles 30 aufgesetzt ist.

Die Funktionsweise des in Figur 2 dargestellten Ventiles ist wie folgt:

Wird der Gleichstrommotor 39 mit einer bestimmten Polarität bestromt, so werden die Eingangswelle 38 des Zahnradgetriebes 37 und - entsprechend untersetzt - die Abtriebswelle des Zahnradgetriebes 36 in einem bestimmten Uhrzeigersinn in Drehung versetzt. Dies hat zur Folge, daß sich auch das zylindrische Teil 35 in dem genannten Sinne verdreht. Aufgrund der Gewindeverbindung zwischen dem zylindrischen Teil 35 und dem Schraubteil 33 bewegt sich letzteres innerhalb der Bohrung 34 des Gehäuseteiles 30 in einem axialen Sinne, z.B. nach oben. Bei dieser nach oben gerichteten Bewegung des Schraubteiles 33 wird der Stößel 9 mittels des Mitnahmeringes 32 nach oben mitgenommen, wodurch der Schließkörper 8 von der Pilotöffnung 47 gegen die Kraft der Feder 13 etwas abhebt. Nunmehr kann Wasser durch die Pilotöffnung 47 abfließen. Zugleich strömt Wasser durch die Druckausgleichsöffnung 17 in die Druckausgleichskammer 19 nach. Der Querschnitt der Druckausgleichsöffnung 17 ist jedoch kleiner als der Querschnitt der Pilotöffnung 47, so daß durch die Druckausgleichsöffnung 17 weniger Wasser in die Druckausgleichskammer 19 nachströmen kann als durch die Pilotöffnung 47 abfließt. Folglich sinkt der Druck in der Druckausgleichskammer 19 ab. Der Druck des einlaßseitig anstehenden Wassers hebt die Membran 7 einschließlich des Formteiles 40 vom Ventilsitz 4 ab, bis die Pilotöffnung 47 wieder in die Nähe des Schließkörpers 8 kommt. Die Pilotöffnung 47 wird jedoch nicht vollständig verschlossen; durch einen entweder dauerhaft offenen oder sich periodisch öffnenden und schließenden Spalt ist ein Druckausgleich über die Membran 7 hinweg möglich. Die Membran 7 steht dabei stationär in dieser Zwischenstellung zwischen der vollen Offen- und der vollen Schließstellung. In entsprechendem Ausmaße kann Wasser zwischen der Membran 7 und dem Ventilsitz 4 durchfließen. Wird nun der Gleichstrommotor 39 erneut im gleichen Sinne bestromt, so wiederholt sich der geschilderte Vorgang: Zunächst hebt der Schließkörper 8 von der Pilotöffnung 47a des Formteiles 40 ab; durch die sich ergebenden Druckveränderungen bewegt sich die Membran 7 weiter vom Ventilsitz 4 weg, bis erneut die Pilotöffnung 47 durch den Schließkörper 8 soweit verschlossen wird, daß eine stationäre, stabile Lage des Ventils erreicht ist. Auf die geschilderte Weise läßt sich die gesamte Charakteristik des Ventiles zwischen der vollen Schließ- und der vollen Offenstellung kontinuierlich durchfahren.

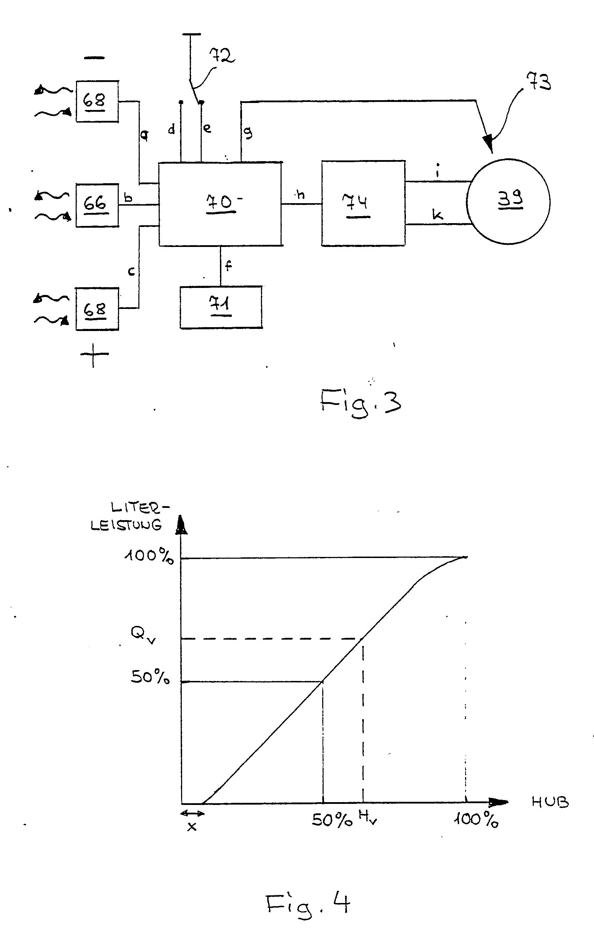

Die mengenmäßige Beziehung zwischen dem Öffnungshub und der zugehörigen Literleistung des Ventiles ist schematisch in Figur 4 dargestellt. Wie diese deutlich macht, ist die Beziehung zwischen diesen beiden Größen zwar nicht vollständig, jedoch in guter Näherung linear. Ein gewisser Anfangshub "x" ist erforderlich, damit das Wasser zu fließen beginnt. Dieser Anfangshub ist Folge der Elastizität des für den Schließkörper 8 bzw. für die Membran 47 verwendeten Materials.

Bei der oben angenommenen Polarität der Spannung, die an den Gleichstrommotor 39 gelegt wurde, ergab sich eine Bewegung des Stößels 9 und damit des Schließkörpers 8 in der Zeichnung nach oben, also in Öffnungsrichtung. Dabei wurde die in Figur 4 dargestellte Charakteristik des Ventils von links unten nach rechts oben durchlaufen, wobei grundsätzlich jeder Punkt auf der Kurve stabil eingestellt werden konnte.

Wird nunmehr der Gleichstrommotor 39 im umgekehrten Sinne bestromt, dreht sich der Drehsinn der Abtriebswelle 36 des Zahnradgetriebes 37 um. Entsprechend wird das Schraubteil 33 axial in der entgegengesetzten Richtung, d.h., nach unten, bewegt. Der Schließkörper 8 folgt dieser nach unten gerichteten Bewegung unter dem Einfluß der Feder 13, wobei der Ring 32 in Anlage an dem Schraubteil 33 bleibt. Der Schließkörper 8 verschließt nunmehr die Pilotöffnung 47a im Formkörper 40. Durch Wasser, welches durch die Druckausgleichsöffnung 17 in die Druckausgleichskammer 19 nachströmt, steigt der Druck in der Druckausgleichskammer 19. Weil die Fläche der Membran, auf welche der Druck von der Druckausgleichskammer 19 aus einwirken kann, größer ist als die in die entgegengesetzte Richtung weisende Fläche, welche unter der Einwirkung des Druckes des einlaßseitig anstehenden Wassers steht, drückt das in der Druckausgleichskammer 19 befindliche Wasser die Membran 7 auf den Ventilsitz 4 zu. Die Pilotöffnung 47a wird nun wiederum teilweise freigegeben, so daß ein Druckausgleich über die Membran 7 hinweg gefunden werden kann und sich ein neuer stabiler Zustand einstellt, in dem sich die Membran 7 näher am Ventilsitz 4 befindet.

Auch in der Schließrichtung, also in Figur 4 von rechts oben nach links unten, kann auf diese Weise jeder Punkt der in Figur 4 dargestellten Charakteristik stabil eingestellt werden.

Die Art der elektrischen Ansteuerung des anhand der Figur 2 beschriebenen Ventils wird nun anhand der Figur 3 erläutert. Dies zeigt ein schematisches Blockschaltbild der Schaltungsanordnung.

In Figur 3 sind wieder der vordere, auf den Benutzer gerichtete Sensor 66 sowie die beiden seitlichen Sensoren 68 dargestellt, welche über Leitungen b bzw. a und c mit einer zentralen Steuereinheit 70 verbunden sind. An die zentrale Steuereinheit 70 ist über eine Leitung f ein Speicher 71 angeschlossen. Leitungen d und e führen von der zentralen Steuereinheit zu einem Betriebsartenschalter 72, dessen nähere Funktion später deutlich wird. Eine weiter Leitung g führt von der zentralen Steuereinheit 70 zu einem Positionssensor 73, der ein für die Stellung des Schließkörpers 8 repräsentatives Signal abgibt. Einzelheiten des Positionssensors 73 sind hier ohne Interesse. Bei dem in Figur 2 dargestellten Ausführungsbeispiel umfaßt der Positionssensor 73 eine magnetische Markierung an einem Referenzrad 29, welches von dem Zahnradgetriebe 37 in Drehung versetzt wird. Die Magnetmarkierung arbeitet mit einem nicht dargestellten Reed-Kontakt zusammen, wobei ggf. ein Zähler die Anzahl der zurückgelegten vollständigen Umdrehungen ermittelt.

Die zentrale Steuereinheit 70 erzeugt nach Regeln, auf die später eingegangen wird, auf einer Leitung h ein Ausgangsignal, welches einer Treiberschaltung 74 zugeführt wird. Diese gibt in Übereinstimmung mit den Kommandos, die ihr über die Leitung h eingegeben werden, auf den Leitungen i, k Spannungssignale ab, welche dem Gleichstrommotor 39 zugeführt werden.

Die genaue Funktion der beschriebenen Schaltungsanordnung ist wie folgt:

Zunächst sei derjenige Fall betrachtet, in welcher der Betriebsartenschalter 72, wie in der Zeichnung dargestellt, mit der Leitung e verbunden ist. Die hierdurch gewählte Betriebsart sei diejenige des Normalbetriebes, in welcher also die Sanitärarmatur ihren normalen Dienst verrichtet.

Zu Beginn sei das in Figur 2 dargestellte Ventil geschlossen; der Schließkörper 8 liegt dabei, wie oben erwähnt, an der Pilotöffnung 47 und die Membran 7 am Ventilsitz 4 an. Der Positionssensor 73 gibt ein Signal ab, welches dieser Schließstellung entspricht.

Tritt nunmehr ein Benutzer in den Überwachungsraum des vorderen Sensors 66, so gibt dieser ein Signal auf der Leitung b an die zentrale Steuereinheit 70. Diese befiehlt der Treiberschaltung 74 über die Leitung h, den Gleichstrommotor 39 über die Leitungen i und k mit einer Gleichspannung solcher Polarität zu bestromen, bei welcher der Schließkörper 8 von der Pilotöffnung 47 abgehoben wird, sich also in Figur 2 nach oben bewegt. Dabei wird, wie bereits oben ausführlich erläutert, das Ventil geöffnet. Die Öffnungsbewegung wird vom Positionssensor 73 überwacht; erreicht der Schließkörper 8 eine Stellung, welche einem zuvor im Speicher 71 abgelegten Öffnungshub entspricht, so beendet die zentrale Steuereinheit 70 über die Leitung h das von der Treiberschaltung 74 auf den Leitungen i und k abgegebene Gleichstromsignal. Der Gleichstrommotor 39 bleibt nunmehr stehen. Es ist ein Öffnungshub erreicht, welcher in Figur 4 mit $H_V$ gekennzeichnet ist.

Beim Eintreten eines Benutzers in den Überwachungsraum des vorderen Sensors 66 öffnet also das Ventil nicht vollständig (Hub = 100%) sondern bis zu einer bevorzugten Stellung $H_V$, welche einer bevorzugten Literleistung $Q_V$ entspricht. Die bevorzugte Literleistung $Q_V$ ist dabei den "Normalbedürfnissen" angepaßt, also einer Literleistung, die im allgemeinen den Wünschen des Benutzers entspricht. In den meisten Fällen kann daher die Sanitärarmatur mit diesem voreingestellten Öffnungshub betrieben werden.

Wünscht der Benutzer ausnahmsweise eine Literleistung, welche von der bevorzugten Literleistung $Q_V$ abweicht, so nähert er eine Hand einem der beiden seitlichen Sensoren 68. Jeweils einer dieser Sensoren (68+) ist einer Vergrößerung der Literleistung (in Figur 3 unten, mit einem Pluszeichen gekennzeichnet), der andere (68-) einer Verringerung der Literleistung (in Figur 3 oben, mit einem Minuszeichen gekennzeichnet) zugeordnet.

Vorliegend sei angenommen, daß der Benutzer eine weitere Vergrößerung der Literleistung wünscht. Er näher daher seine Hand dem in Figur 3 unteren seitlichen Sensor 68 +. Dieser gibt über die Leitung c an die zentrale Steuereinheit 70 ein entsprechendes Signal ab. Die zentrale Steuereinheit 70 veranlaßt die Treiberschaltung 74 durch ein Kommando auf der Leitung h, den Gleichstrommotor 39 über die Leitungen i und k solange im Öffnungssinne zu bestromen, wie sich die Hand im Bereich des seitlichen Sensors 68 + befindet. Spätestens bei Erreichen des vollen Öffnungshubes (überwacht durch den Positionssensor 73) wird jedoch das Ausgangssignal der Treiberschaltung 74 abgestellt.

Wenn umgekehrt der Benutzer eine geringere Literleistung als die bevorzugte Literleistung $Q_V$ wünscht, nähert er seine Hand dem seitlichen Sensor 68-. Dessen Ausgangssignal auf der Leitung a veranlaßt die zentrale Steuerschaltung 70, über die Leitung h der Treiberschaltung 74 folgenden Befehl zu geben: Bestrome den Gleichstrommotor 39 über die Leitungen i und k mit einer solchen Polarität, daß sich der Gleichstrommotor 39 in Schließrichtung verdreht. Wiederum liegt das Ausgangssignal der Treiberschal tung 74 solange am Gleichstrommotor 39 an, wie sich die Hand im Überwachungsraum des seitlichen Sensors 68- befindet. Spätestens jedoch bei Erreichen des Hubes 0, überwacht durch den Positionssensor 73, wird das Ausgangssignal der Treiberschaltung 74 abgestellt.

Tritt der Benutzer insgesamt aus dem Überwachungsraum des vorderen Sensors 66, so fällt dessen Signal auf der Leitung b weg. Daraufhin befiehlt die zentrale Steuereinheit 70 über die Leitung h der Treiberschaltung 74, den Gleichstrommotor 39 durch geeignete Signale auf den Leitungen i und k in die vollständige Schließstellung zurückzufahren. Das Erreichen der vollständigen Schließstellung, bei welcher die Membran 7 wiederum auf dem Ventilsitz 4 aufliegt und die Pilotöffnung 47 durch den Schließkörper 8 verschlossen ist, wird erneut durch den Positionssensor 73 überwacht.

Hinsichtlich der Form der Ausgangssignale der Treiberschaltung 74 auf den Leitungen i und k ist noch folgende Besonderheit erwähnenswert:

Sofern diese Ausgangssignale als Folge einer Änderung des Signalzustandes auf der Leitung b am Ausgang des vorderen Sensors 66 erscheinen, handelt es sich um ununterbrochene "Dauerstrichsignale". Der Gleichstrommotor 39 wird so in der schnellstmöglichen Weise in die gewünschte Stellung (entweder in den bevorzugten Hub $H_V$ oder in die Stellung 0) verfahren.

Wenn jedoch die Ausgangssignale der Treiberschaltung 74 auf den Leitungen i und k Folge von Ausgangssignalen der seitlichen Sensoren 68 auf den Leitungen a und c sind, handelt es sich bei ihnen um gepulste Signale, wobei das Tastverhältnis zwischen Signal und Signalpause etwa 1:10 betragen kann. Hierdurch wird die Bewegung des Gleichstrommotors 39 erheblich verlangsamt, was eine feinfühligere Einstellung der gewünschten Literleistung möglich macht.

Wird der Betriebsartenschalter 72 umgelegt, so daß er mit der Leitung d in Verbindung steht, ist die Funktionsweise der Sanitärarmatur identisch mit folgender Ausnahme: Eine mittels der seitichen Sensoren 68 eingestellte Literleistung wird gleichzeitig als neue bevorzugte Literleistung $Q_V$ in den Speicher 71 eingegeben. In dieser Betriebsart läßt sich also die bevorzugte Literleistung $Q_V$ wählen, auf welche in der erstgeschilderten Betriebsart (Betriebsartenschalter 72 mit der Leitung e verbunden) der Motor 39 mit größtmöglicher Geschwindigkeit zufährt, wenn der Benutzer in den Überwachungsraum des vorderen Sensors 66 tritt.

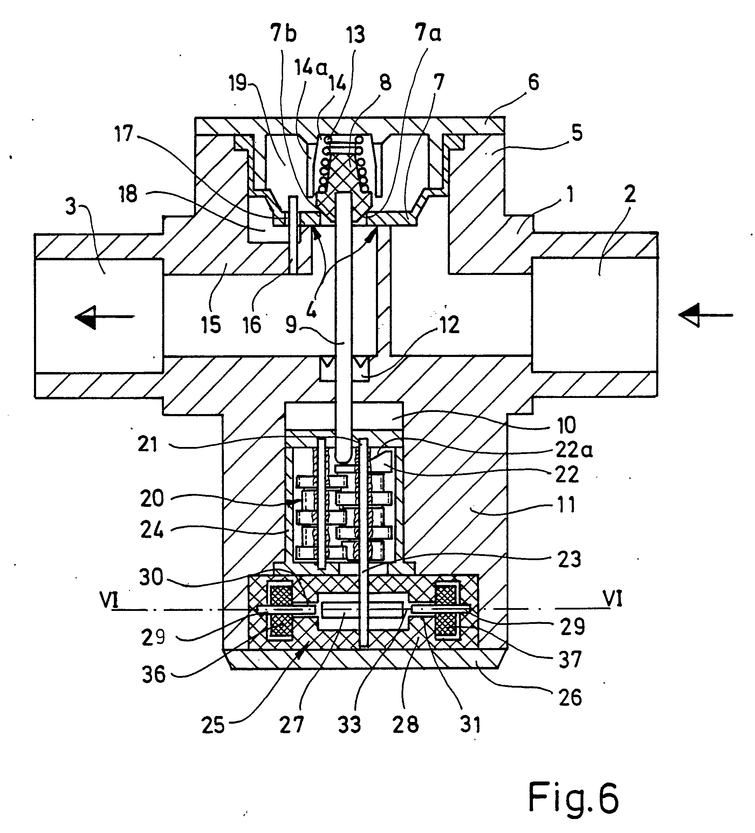

In Figur 6 ist ein zweites Ausführungsbeispiel eines pilotgesteuerten Ventils dargestellt, das bei der Sanitärarmatur von Figur 1 eingesetzt werden kann. Es unterscheidet sich vom Ausführungsbeispiel in Figur 2 im Wesentlichen dadurch, daß statt eines Gleichstrommotors ein elektrischer Schrittmotor eingesetzt wird. Im Übrigen sind die Verhältnisse weitgehend identisch; entsprechende Teile sind daher mit demselben Bezugszeichen gekennzeichnet.

Das pilotgesteuerte Ventil umfaßt ein Gehäuse 1 mit einer Einlaßöffnung 2 und einer Auslaßöffnung 3. Im Strömungsweg zwischen der Einlaßöffnung 2 und der Auslaßöffnung 3 ist ein gehäusefester Ventilsitz 4 angeordnet, auf welchem eine topfförmige Membran 7 aufliegt. Sie befindet sich in einem Gehäuseansatz 5, der durch einen Deckel 6 verschlossen ist. Die Membran 7 ist mit ihrem Rand zwischen dem Deckel 6 und dem Rand des Gehäuseansatzes 5 eingespannt und dichtet das Gehäuse 1 dadurch nach außen ab.

Die Membran 7 weist eine zentrale Pilotöffnung 7a auf, die durch einen zwischen der Membran 7 und dem Deckel 6 angeordneten Schließkörper 8 verschließbar ist. Der Schließkörper 8 ist am Ende eines Stößels 9 befestigt, welcher durch die Pilotöffnung 7a der Membran 7 hindurchgeführt ist und in einer Kammer 10 endet. Diese ist in einem dem ersten Gehäuseansatz 5 gegenüberliegenden zweiten Gehäuseansatz 11 ausgebildet. In der die Kammer 10 abschließenden Gehäusewand sind ein Durchgang und eine Dichtung 12 für den Stößel 9 vorgesehen.

Der Schließkörper 8 steht unter der Wirkung einer Druckfeder 13, welche sich am Deckel 6 abstützt. Mehrere Vorsprünge des Deckels 6 begrenzen den Öffnungshub der Membran 7.

Radial außerhalb des Ventilsitzes 4 ist an der Membran 7 eine Druckausgleichsöffnung 17 vorgesehen, welche eine mit der Einlaßöffnung 2 in Verbindung stehende Kammer 18 mit einer zwischen der Membran 7 und dem Deckel 6 gebildeten Druckausgleichskammer 19 verbindet. Um den lichten Querschnitt der Druckausgleichsöffnung 17 kleinzuhalten, ragt ein Stift 16 durch sie hindurch, welcher in einer Gehäusewand 15 befestigt ist.

In der Kammer 10 ist ein Getriebe 20 untergebracht. Dabei handelt es sich um die Kombination eines Übersetzungsgetriebes mit einem Kurvengetriebe. Das Getriebe 20 befindet · sich in einem Getriebegehäuse 24, welches bis zum Anschlag in die Kammer 10 eingeschoben ist. Auf der feststehenden Abtriebswelle 21 des Getriebes 20 sitzt neben anderen Getrieberädern eine drehbare Kurvenscheibe 22, deren Kurvenfläche 22a sich auf der einen Seitenfläche der Kurvenscheibe 22 befindet. Der Stößel 9 ist in das Getriebe 20 hineingeführt und stützt sich mit seinem Ende auf der Kurvenscheibe 22 ab. Die Antriebswelle 23 des Getriebes 20 führt am gegenüberliegenden Ende des Getriebes 20 aus dem Getriebegehäuse 24 hinaus und in das Gehäuse eines angrenzend angeordneten elektrischen Schrittmotors 25 hinein. Die Antriebswelle 23 des Getriebes 20 ist zugleich die Ausgangswelle des Schrittmotors 25.

Innerhalb des Gehäuses 28 des Schrittmotors 25 befindet sich ein Rotor 27, eine flache, kreisrunde Scheibe aus einem Hochleistungsmagneten. Die Magnetisierungsrichtung verläuft in Richtung eines Durchmessers der Rotorscheibe 27. In das Gehäuse 28 ist ferner ein Stator 29 aus Weicheisen eingesetzt. Der Stator 29 ist ebenso wie der Rotor 27 flach ausgebildet und umgibt den Rotor 27 in seiner Ebene rahmenförmig.

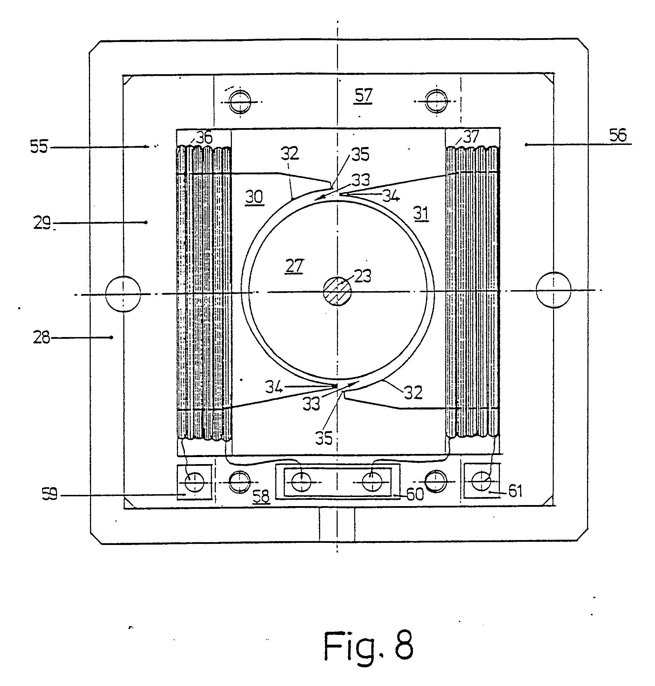

Figur 8 zeigt einen Blick in den geöffneten Schrittmotor 25. Der Stator 29 umschließt den Rotor 27, der mit seiner Welle 23 in der Wand des Gehäuses 28 gelagert ist, mit zwei einander zugewandten Polschuhen 30 und 31, welche ungefähr halbkreisförmige Ausnehmungen 32 haben. Die beiden Polschuhe 30 und 31 sind exzentrisch in Bezug auf die Lage der Welle 23 angeordnet, wodurch sich zwischen dem Rotorumfang und den Polschuhen 30 und 31 Luftspalte 33 ergeben. Diese werden von der einen Spitze 34 bis zur anderen Spitze 35 beider Polschuhe 30, 31 allmählich breiter und bestimmen dadurch den Drehsinn des Rotors 27: Er dreht sich in der Richtung, in welcher sich die Luftspalte 33 erweitern. Die Polschuhe 30 und 31 sind über seitliche Schenkel 57 und 58 des Stators 29 miteinander verbunden und dadurch magnetisch rückgeschlossen. Die Schenkel 57 und 58 ergänzen den Stator 29 zu einem rahmenförmigen Gebilde, welches den Rotor 27 in seiner Hauptebene vollständig umschließt und nur geringe Streuflüsse austreten läßt.

Die Polschuhe 30 und 31 tragen je eine Wicklung 36 bzw. 37. Die beiden Wicklungen sind gleichsinnig angeordnet und in Reihe geschaltet. Die Anschlußpunkte 59 und 61 sowie der Verbindungspunkt 60 der beiden Wicklungen 36 und 37 sind auf einem der Schenkel 58 des Stators 29 angeordnet.

Die Funktionsweise des beschriebenen Ventils ist wie folgt:

Wird in die Wicklungen 36 und 37 des Schrittmotors 25 ein elektrischer Impuls eingespeist, so verursacht dies eine Drehung des Rotors 27 um einen bestimmten Winkel, bei einem zweipoligen Rotor (wie dargestellt um) eine halbe Rotorumdrehung. Hierbei wird die Kurvenscheibe 22 verdreht; das Ende des Stößels 9 gleitet im Verlauf dieser Drehung auf die Schrägfläche 22a der Kurvenscheibe 22 und wird gegen die Rückstellkraft der Feder 13 verschoben. Dadurch hebt der Schließkörper 8 etwas von der Pilotöffnung 7a der Membran ab. Die Vorgänge spielen sich nun in derselben Weise ab, wie dies oben für das erste Ausführungsbeispiel anhand der Figur 2 beschrieben wurde.

Wiederum läßt sich die gesamte Charakteristik des Ventiles zwischen der vollen Schließund der vollen Offenstellung, diesmal punktweise) durchfahren, wobei die Anzahl der Punkte durch die Polarität des Rotors einerseits und durch die Art des Getriebes 20 andererseits bestimmt ist.

Der beschriebene Schrittmotor 25 ist "unidirektional", d.h., er dreht sich nur in einer Richtung. Soll daher das Ventil wieder geschlossen werden, wird die Kurvenscheibe 33 durch den Schrittmotor 25 weitergedreht, bis der Stößel 9 nach Durchlaufen der vollen Offenstellung des Ventils über eine absteigende Schrägfläche der Kurvenscheibe 22 wieder zurückgeführt wird. Dabei verschließt der Schließkörper 8 unter der Wirkung der Druckfeder 13 die Pilotöffnung 7a in der Membran 7.

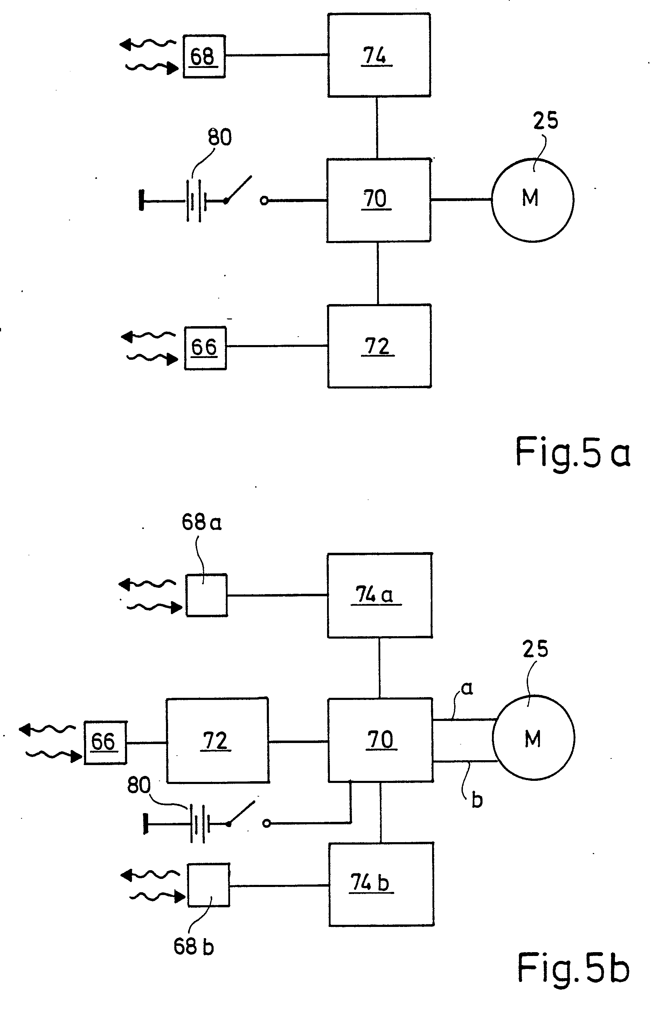

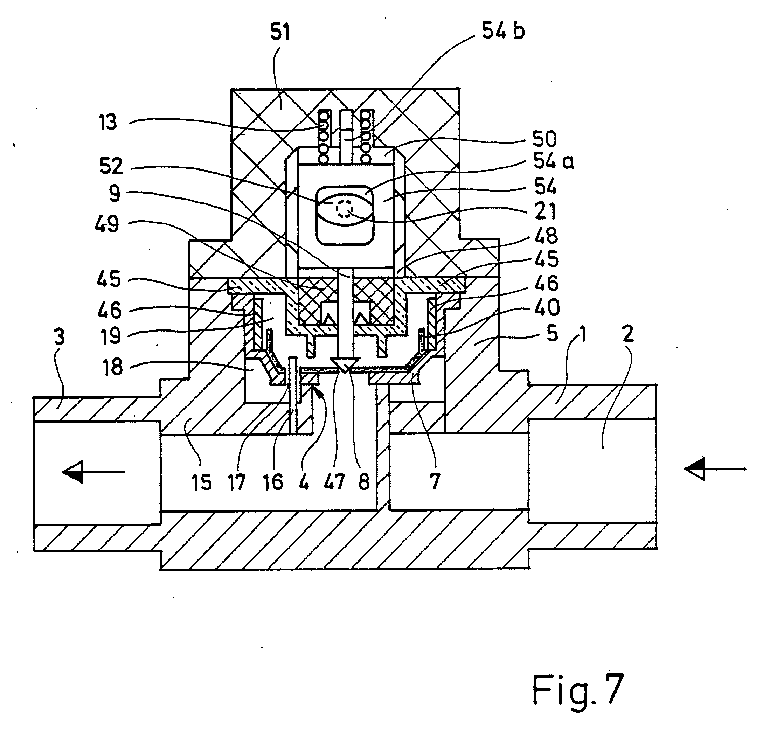

Die Art der elektrischen Ansteuerung des anhand der Figuren 6 und 7 beschriebenen Ventils in der in Figur 1 dargestellten Sanitärarmatur wird nun anhand der Figur 5a erläutert. Diese zeigt ein schematisches Blockschaltbild der entsprechenden Schaltungsanordnung.

Der erste (vordere) Sensor 66 ist mit einem ersten Logikkreis 72 verbunden. Er ist so eingerichtet, daß beim Ein treten eines Gegenstandes in den Überwachungsraum des ersten Sensors eine ganz bestimmte Anzahl von Impulsen auf der Ausgangsleitung erscheint. Diese Impulse werden einer Treiberschaltung 70 zugeführt, welche hiernach entsprechende Impulse geeigneter Spannung und Stromstärke erzeugt und den Wicklungen des Schrittmotors 25 zuführt. Auf diese Weise wird beim Eintreten eines Gegenstandes in den Überwachungsraum des ersten Sensors 66 das Ventil in eine vorbestimmte Öffnungslage gebracht. Umgekehrt wird, wenn der Gegenstand den Überwachungsraum des ersten Sensors 66 wieder verläßt, eine entsprechende Anzahl von Impulsen in dem ersten Logikkreis 72 erzeugt, mit denen der Schrittmotor 25 wieder in die volle Schließstellung zurückgefahren wird. Durch den Sensor 66 ist also eine ähnliche Betriebsweise der Sanitärarmatur wie bei solchen bekannten Armaturen möglich, die mit digital schaltenden Magnetventilen arbeiten: Bei der Annäherung eines Gegenstandes fließt Wasser einer ganz bestimmten Menge, ggf. auch einer bestimmten Temperatur.

Ist der Benutzer jedoch mit der ihm vorgegebenen Wassermenge nicht einverstanden, so nähert er eine Hand dem zweiten, seitlichen Sensor 68. Solange sich die Hand oder ein anderer Gegenstand im Überwachungsbereich des Sensors 68 befindet, werden in einem zweiten Logikkreis 74 Impulse erzeugt, die wiederum der Treiberschaltung 70 zugeleitet werden. Die Treiberschaltung 70 formt hieraus die zum Betrieb des Schrittmotors 25 erforderlichen, entsprechenden Impulse. Insgesamt ist die Anordnung also so, daß der Schrittmotor 25 solange mit Impulsen schrittweise fortgestellt wird, wie sich ein Gegenstand im Überwachungsraum des Sensors 68 befindet. Ist die gewünschte Wassermenge erreicht, nimmt der Benutzer die Hand aus dem Überwachungsraum des Sensors 68 weg.

Bei dem anhand der Figuren 5a und 6 beschriebenen unidirektionalen Schrittmotor 25 ist es nicht immer möglich, die gewünschte Wassermenge "auf direktem Wege" anzusteuern, da eben eine Stellungsveränderung der Membran zunächst nur in einer Richtung möglich und eine Bewegungsumkehr erst nach Durchlaufen des Endes des Hubes des Stößels möglich ist. Gleichwohl hat die Verwendung eines derartigen unidirektionalen Schrittmotors 25 erhebliche Vorteile, was die Kosten und den Energiebedarf anbelangt.

In Figur 5b ist eine Schaltungsanordnung im Blockdiagramm gezeigt, welche sich zum Betrieb eines bidirektionalen Schrittmotors 25 eignet. Der genaue Aufbau dieses Schrittmotors ist für die vorliegenden Beschreibung ohne Interesse. Es genügt zu wissen, daß diesem bidirektionalen Schrittmotor 25 zwei unterschiedliche Impulsarten zugeführt werden können, die sich entweder in der Polarität oder, wie dargestellt, in der Art der Anschlüsse (a und b) der bestromten Wicklungen unterscheiden.

Die Funktion des ersten, vorderen Sensors 66 ist dieselbe wie bei dem oben, anhand der Figur 5a beschriebenen Ausführungsbeispiel. Tritt ein Gegenstand in den zugeordneten Überwachungsraum ein, so erzeugt der erste Logikkreis 72 eine bestimmte Anzahl von Impulsen, die in der Treiberschaltung 70 in entsprechende, zum Betrieb des Schrittmotors 25 geeignete Impulse umgesetzt werden. Diese Impulse werden dem Schrittmotor 25 auf der Leitung a zugeführt, was bedeutet, daß der Schrittmotor in Öffnungsrichtung verdreht wird, bis sich ein bestimmter, vorprogrammierter Wasserfluß einstellt.

Entsprechend wird, wenn der Gegenstand den Überwachungsraum des Sensors 66 verläßt, eine Anzahl von Impulsen erzeugt, die über die Leitung b an den Schrittmotor 25 gelegt werden. Hierdurch wird das Ventil wiederum in die Schließstellung gefahren.

Wünscht der Benutzer bei geöffnetem Ventil eine Mengenveränderung in der einen Richtung (z.B. mehr Wasser), so nähert er seine Hand dem auf der einen Seite der Armatur angeordneten Sensor 68a. Solange sich die Hand im zugeordneten Überwachungsraum befindet, erzeugt der erste Logikkreis 74a Impulse, die von der Treiberschaltung 70 umgeformt und über die Leitung a (Öffnungsrichtung) dem Schrittmotor 25 zugeführt werden. In entsprechendem Ausmaße öffnet sich das Ventil.

Wünscht der Benutzer dagegen weniger Wasser, so nähert er seine Hand dem Sensor 68b, der auf der gegenüberliegenden Seite der Sanitärarmatur angebracht ist. Solange sich die Hand im Überwachungsraum des Sensors 68b befindet, erzeugt ein weiterer Logikkreis 74b Impulse, die erneut in der Treiberschaltung 70 umgeformt und dann auf der Leitung b dem Schrittmotor 25 zugeführt werden. Hierdurch wird der Schrittmotor 25 schrittweise in Richtung auf die Schließstellung verfahren. Entsprechend ändert sich die Menge des ausfließenden Wassers.

Bei der bisherigen Beschreibung wurde davon ausgegangen, daß nur ein Wasserstrom zu regeln ist. Selbstverständlich können sowohl die Schaltung nach Figur 3 als auch die Schaltungen nach Figuren 5a und 5b verdoppelt werden, um so mit getrennten Ventilen, getrennten Schrittmotoren 25 und getrennten Sensoren 68 sowohl die Menge als auch die Temperatur des ausfließenden Mischwassers einstellen zu können. Der vordere, erste Sensor 66 braucht dagegen nur einmal vorhanden zu sein; mit ihm wird eine einprogrammierte Menge und Temperatur des ausfließenden Mischwassers zum Fließen gebracht.

In Figur 7 ist ein weiteres Ausführungsbeispiel eines Ventils dargestellt. Während bei dem Ventil nach Figur 6 die Membran 7 und das Getriebe 20 auf gegenüberliegenden Seiten des Strömungsweges im Ventilgehäuse 1 liegen, ist dies beim Ausführungsbeispiel nach Figur 7 anders. Hier ist in einem Gehäuseansatz 5 oberhalb es Ventilsitzes 4 eine Membran 7 angeordnet, an welcher auf der dem Ventilsitz 4 abgewandten Seite ein strahlenförmiges Formteil 40 befestigt ist. Der Rand der Membran 7 ist zwischen einer Schulter des Gehäuseansatzes 5 und einem topfförmigen Einsatz 45 eingespannt. Ein Ring 46 hält einen an den Rand der Membran 7 anschließenden zylindrischen Abschnitt in der zylindrischen Innenwand des Gehäuseansatzes 5 fest. Das Formteil 40 weist eine zentrale Pilotöffnung 47 auf, welche koaxial zu einer größeren zentralen Öffnung 7a der Membran 7 angeordnet ist. Die Pilotöffnung 47 ist durch einen kegeligen Schließkörper 8 verschließbar, der am Ende eines Stößels 9 angebracht ist. Dieser ist vollständig auf der dem Ventilsitz 4 abgewandten Seite des Formteils 40 angeordnet und durch den Einsatz 45, eine darin angeordnete Dichtung 48 und einen die Dichtung im Einsatz 45 festhaltenden Paßkörper 49 in eine Kammer 50 hindurchgeführt. Letztere befindet sich in einem auf dem Gehäuseansatz 5 befestigten Aufsatz 51. In diesem sind das Getriebe 20 und der Schrittmotor 25 untergebracht. Vom Getriebe 20 ist lediglich eine am Ende der Abtriebswelle fest angebrachte elliptische Kurvenscheibe 52 dargestellt. Der Rest des Getriebes 20 und der Schrittmotor 25 liegen hinter der Zeichenebene der Figur 7 im Aufsatz 51.

Die Kurvenscheibe 52 steckt in einem Führungsteil 54, welches am hinteren Ende des Stößels 9 befestigt ist. Das Führungsteil 54 ist in Längsrichtung des Stößels 7 verschiebbar in der Kammer 50 gelagert und hat eine Ausnehmung 54a, welche in einem die Abtriebswelle 21 im rechten Winkel schneidenden und längs durch den Stößel 9 gelegten Schnitt einen ungefähr quadratischen Querschnitt hat. Die Seitenlänge des Quadrats stimmt dabei mit der Länge der Hauptachse der Kurvenscheibe 52 in etwa überein. Die Führung des Führungsteils 54 erfolgt zum einen durch den Stößel 9 und zum anderen durch einen stiftförmigen Fortsatz 54b, welcher in der Flucht des Stößels 9 auf der dem Stößel 9 abgewandten Seite des Führungsteils 54 angeordnet ist und in einer dazu passenden Bohrung des Aufsatzes 51 geführt ist. Der Fortsatz 54b ist konzentrisch von einer Druckfeder 13 umgeben, welche auf das Führungsteil 54 einwirkt und den Schließkörper 8 gegen das Formteil 40 drückt und dessen Pilotöffnung 47 verschiebt.

Sowohl bei dem Ausführungsbeispiel nach Figur 6 als auch bei dem Ausführungsbeispiel nach Figur 7 wird durch die Gestaltung der Steuerkurve, welche die Drehbewegung des Schrittmotors 25 in die Linearbewegung des Stößels 9 umsetzt, dafür gesorgt, daß die Öffnungscharakteristik des Ventiles möglichst linear ist.

**Ansprüche**

1. Berührungslos gesteuerte Sanitärarmatur mit
a) mindestens einem Ventil, durch welches die Menge des die Sanitärarmatur durchfließenden Wassers kontinuierlich veränderbar ist;
b) mindestens einem Sensor und einem diesem Sensor zugeordneten Überwachungsraum, wobei die Stellung des Ventils verändert wird, wenn ein Gegenstand in den Überwachungsraum eintritt bzw. diesen verläßt,
dadurch gekennzeichnet, daß
c) das Ventil ein pilotgesteuertes Ventil ist und umfaßt:
ca) eine mit einem Ventilsitz (4) zusammenwirkende Membran (7), welche sich unter der Wirkung der beidseits von ihr anstehenden Wasserdrucke relativ zum Ventilsitz (4) bewegt und eine Pilotöffnung (47; 7a) aufweist;
cb) einen von der Pilotöffnung (47; 7a) der Membran (7) abhebbaren bzw. an diesen anlegbaren Schließkörper (8), der über einen linear bewegbaren Stößel (9) betätigbar ist;
cc) einen elektrischen Motor (39; 25), dessen Ausgangswelle eine Drehbewegung durchführt;
cd) eine Einrichtung (32, 33; 20), welche die Drehbewegung der Ausgangswelle in eine Linearbewegung des Stößels (9) umsetzt.

2. Sanitärarmatur nach Anspruch 1, dadurch gekennzeichnet, daß zwei Sensoren (68+, 68-) vorhanden sind, wobei bei Anwesenheit eines Gegenstandes im Überwachungsraum des ersten Sensors (68+) der elektrische Motor (39; 25) in einer Richtung verstellt wird, die einer Vergrößerung des Wasserflusses entspricht, und bei Anwesenheit eines Gegenstandes im Überwachungsraum des zweiten Sensors (68-) der elektrische Motor (39; 235) in einer Richtung verstellt wird, die einer Verkleinerung des Wasserflusses entspricht.

4. Sanitärarmatur nach einem der Ansprüche 1 bis 3, dadurch gekennzeichnet, daß zwei unabhängige, pilotgesteuerte Ventile vorgesehen sind, von denen das eine der Einstellung des Kaltwasserflusses und das andere der Einstellung des Warmwasserflusses dient und denen jeweils mindestens ein gesonderter Sensor zugeordnet ist.

5. Sanitärarmatur nach einem der vorhergehenden Ansprüche, dadurch gekennzeichnet, daß ein zusätzlicher Sensor (66) vorgesehen ist, wobei bei Eintritt eines Gegenstandes in den Überwachungsraum des zusätzlichen Sensors (66) alle Ventile in einen bevorzugten Öffnungshub ($H_V$) und beim Austritt des Gegenstandes aus dem Überwachungsraum alle Ventile in den Schließzustand gebracht werden.

6. Sanitärarmatur nach Anspruch 5 bei Rückbeziehung auf Anspruch 2, dadurch gekennzeichnet, daß in einer Betriebsart die beiden Sensoren (68a, 68b), welche einer Vergrößerung bzw. einer Verkleinerung des Wasserflusses dienen, zur Einstellung des bevorzugten Öffnungshubes (H$_V$) verwendbar sind.

7. Sanitärarmatur nach einem der vorhergehenden Ansprüche, dadurch gekennzeichnet, daß der elektrische Motor (39) ein Gleichstrommotor ist.

8. Sanitärarmatur nach Anspruch 7, dadurch gekennzeichnet, daß der Gleichstrommotor (39) bei Anwesenheit eines Gegenstandes im Überwachungsraum eines der beiden Sensoren (68 +, 68-) mit gepulstem Gleichstrom gespeist wird.

9. Sanitärarmatur nach einem der Ansprüche 1 bis 6, dadurch gekennzeichnet, daß der elektrische Motor ein Schrittmotor (25) ist, dessen Ausgangswelle (23) sich bei jedem zugeführten elektrischen Impuls um einen definierten Winkel verdreht.

10. Sanitärarmatur nach Anspruch 9, dadurch gekennzeichnet, daß der Schrittmotor (25) unidirektional und nur ein Sensor (68) zur Veränderung der Stellung des Ventils vorhanden ist.

11. Sanitärarmatur nach Anspruch 9, dadurch gekennzeichnet, daß der Schrittmotor (25) bidirektional ist.

12. Verwendung eines pilotgesteuerten Ventils mit
a) einer mit einem Ventilsitz (4) zusammenwirkenden Membran (7), welche sich unter der Wirkung der beidseits von ihr anstehenden Wasserdrucke relativ zum Ventilsitz (4) bewegt und eine Pilotöffnung (47; 7a) aufweist;
b) einem von der Pilotöffnung (47) der Membran (7) abhebbaren bzw. an diese anlegbaren Schließkörper (8), der über einen linear bewegbaren Stößel (9) betätigbar ist;
c) einem elektrischen Motor (39; 25), dessen Ausgangswelle eine Drehbewegung durchführt;
d) einer Einrichtung (32, 33; 20), welche die Drehbewegung der Ausgangswelle in eine Linearbewegung des Stößels (9) umsetzt,
zur kontinuierlichen Einstellung der Menge eines strömenden Mediums.


Geänderte Patentansprüche gemäss Regel 86(2) EPÜ.


1. Berührungslos gesteuerte Sanitärarmatur mit
a) mindestens einem Ventil, durch welches die Menge des die Sanitärarmatur durchfließenden Wassers kontinuierlich veränderbar ist;
b) mindestens einem Sensor und einem diesem Sensor zugeordneten Überwachungsraum, wobei die Stellung des Ventils verändert wird, wenn ein Gegenstand in den Überwachungsraum eintritt bzw. diesen verläßt,
dadurch gekennzeichnet, daß
c) das Ventil ein pilotgesteuertes Ventil ist und umfaßt:
ca) eine mit einem Ventilsitz (4) zusammenwirkende Membran (7), welche sich unter der Wirkung der beidseits von ihr anstehenden Wasserdrucke relativ zum Ventilsitz (4) bewegt und eine Pilotöffnung (47; 7a) aufweist;
cb) einen von der Pilotöffnung (47; 7a) der Membran (7) abhebbaren bzw. an diesen anlegbaren Schließkörper (8), der über einen linear bewegbaren Stößel (9) betätigbar ist;
cc) einen elektrischen Motor (39; 25), dessen Ausgangswelle eine Drehbewegung durchführt;
cd) eine Einrichtung (32, 33; 20), welche die Drehbewegung der Ausgangswelle in eine Linearbewegung des Stößels (9) umsetzt.

2. Sanitärarmatur nach Anspruch 1, dadurch gekennzeichnet, daß zwei Sensoren (68 +, 68-) vorhanden sind, wobei bei Anwesenheit eines Gegenstandes im Überwachungsraum des ersten Sensors (68 +) der elektrische Motor (39; 25) in einer Richtung verstellt wird, die einer Vergrößerung des Wasserflusses entspricht, und bei Anwesenheit eines Gegenstandes im Überwachungsraum des zweiten Sensors (68-) der elektrische Motor (39; 235) in einer Richtung verstellt wird, die einer Verkleinerung des Wasserflusses entspricht.

3. Sanitärarmatur nach einem der Ansprüche 1 bis 2, dadurch gekennzeichnet, daß zwei unabhängige, pilotgesteuerte Ventile vorgesehen sind, von denen das eine der Einstellung des Kaltwasserflusses und das andere der Einstellung des Warmwasserflusses dient und denen jeweils mindestens ein gesonderter Sensor zugeordnet ist.

4. Sanitärarmatur nach einem der vorhergehenden Ansprüche, dadurch gekennzeichnet, daß ein zusätzlicher Sensor (66) vorgesehen ist, wobei bei Eintritt eines Gegenstandes in den Überwachungsraum des zusätzlichen Sensors (66) alle Ventile in einen bevorzugten Öffnungshub (H$_V$) und beim Austritt des Gegenstandes aus dem Überwachungsraum alle Ventile in den Schließzustand gebracht werden.

5. Sanitärarmatur nach Anspruch 4 bei Rückbeziehung auf Anspruch 2, dadurch gekennzeichnet, daß in einer Betriebsart die beiden Sensoren (68a, 68b), welche einer Vergrößerung bzw. einer Verkleinerung des Wasserflusses dienen, zur Einstellung des bevorzugten Öffnungshubes (H$_V$) verwendbar sind.

6. Sanitärarmatur nach einem der vorhergehenden Ansprüche, dadurch gekennzeichnet, daß der elektrische Motor (39) ein Gleichstrommotor ist.

7. Sanitärarmatur nach Anspruch 6, dadurch gekennzeichnet, daß der Gleichstrommotor (39) bei Anwesenheit eines Gegenstandes im Überwachungsraum eines der beiden Sensoren (68 +, 68-) mit gepulstem Gleichstrom gespeist wird.

8. Sanitärarmatur nach einem der Ansprüche 1 bis 5, dadurch gekennzeichnet, daß der elektrische Motor ein Schrittmotor (25) ist, dessen Ausgangswelle (23) sich bei jedem zugeführten elektrischen Impuls um einen definierten Winkel verdreht.

9. Sanitärarmatur nach Anspruch 8, dadurch gekennzeichnet, daß der Schrittmotor (25) unidirektional und nur ein Sensor (68) zur Veränderung der Stellung des Ventils vorhanden ist.

10. Sanitärarmatur nach Anspruch 8, dadurch gekennzeichnet, daß der Schrittmotor (25) bidirektional ist.

11. Verwendung eines pilotgesteuerten Ventils mit

a) einer mit einem Ventilsitz (4) zusammenwirkenden Membran (7), welche sich unter der Wirkung der beidseits von ihr anstehenden Wasserdrucke relativ zum Ventilsitz (4) bewegt und eine Pilotöffnung (47; 7a) aufweist;

b) einem von der Pilotöffnung (47) der Membran (7) abhebbaren bzw. an diese anlegbaren Schließkörper (8), der über einen linear bewegbaren Stößel (9) betätigbar ist;

c) einem elektrischen Motor (39; 25), dessen Ausgangswelle eine Drehbewegung durchführt;

d) einer Einrichtung (32, 33; 20), welche die Drehbewegung des Gleichstrommotors (39; 25) in eine Linearbewegung des Stößels (9) umsetzt,

zur kontinuierlichen Einstellung der Menge eines strömenden Mediums.

Fig. 1

Fig. 2

2328,9

Fig. 3

Fig. 4

Fig.5 a

Fig.5b

Fig.6

Fig.7

Fig. 8

| Kategorie | **EINSCHLÄGIGE DOKUMENTE**<br>Kennzeichnung des Dokuments mit Angabe, soweit erforderlich,<br>der maßgeblichen Teile | Betrifft<br>Anspruch | EP 88115359.7 |
|---|---|---|---|
| | | | KLASSIFIKATION DER<br>ANMELDUNG (Int. Cl.4) |
| A | AT - B - 326 573 (KÜHNE)<br>* Gesamt * | 1 | F 16 K 31/02<br>F 16 K 31/04 |
| | -- | | |
| A | DE - A1 - 3 606 385 (MATSUSHITA)<br>* Gesamt * | 1-12 | |
| | -- | | |
| A | GB - A - 2 103 391 (PEGLERS LIMITED)<br>* Gesamt * | 1,12 | |
| | -- | | |
| A | GB - A - 2 139 322 (AUTOMATIC<br>SWITCH COMPANY)<br>* Fig. 1-3; Zusammenfassung * | 1,12 | |
| | -- | | |
| A | US - A - 4 534 537 (ZUKAUSKY)<br>* Ansprüche; Fig. 2 * | 1,12 | RECHERCHIERTE<br>SACHGEBIETE (Int. Cl.4) |
| | -- | | |
| A | US - A - 4 556 193 (YOSHIGA)<br>* Gesamt * | 1,12 | F 16 K |
| | -- | | |
| A | SOVIET INVENTIONS ILLUSTRATED, Sek-<br>tionen P,Q, Woche 8652, 11. Februar<br>1987<br>DERWENT PUBLICATIONS LTD., London<br>Q 66<br>* SU-1227-890-A (SOZIEV D T) * | 1,12 | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 24-11-1988 | BAUMANN |